# EUROPEAN PATENT APPLICATION

(11) **EP 2 472 647 A2**
(43) Date of publication of application: **04.07.2012**
(21) Application number: 11825479.6
(22) Date of filing: 16.09.2011
(51) Int. Cl.: H01M 4/02, H01M 4/66, H01M 4/38, H01M 10/0566, H01M 10/05

(54) **ELECTRODE FOR A MAGNESIUM RECHARGEABLE BATTERY AND A MAGNESIUM RECHARGEABLE BATTERY COMPRISING THE SAME**

(30) Priority: 16.09.2011 KR 20110093448; 17.09.2010 KR 20100091828
(71) Applicant: LG Chem, Ltd., Youngdungpo-gu Seoul 150-721 (KR)
(72) Inventor: JUNG, Young-Hwa, Daejeon 305-509 (KR); CHOI, Young-Sun, Daejeon 305-340 (KR); HONG, Seung-Tae, Daejeon 305-761 (KR)
(74) Representative: Cabinet Plasseraud
(86) International application number: PCT/KR2011/006880
(87) International publication number: WO 2012/036519

(57) **Abstract**

Disclosed is an electrode for a magnesium secondary battery. The electrode includes a current collector and a magnesium plating layer formed on the surface of the current collector. The electrode is simple to produce and is inexpensive. In addition, the electrode is in the form of a thin film. Therefore, the electrode is useful for the fabrication of a magnesium secondary battery with high energy density. Further disclosed is a magnesium secondary battery including the electrode.

## Description

### CROSS-REFERENCE TO RELATED APPLICATION

This application claims priority to Korean Patent Application Nos. 10-2010-0091828 and 10-2011-0093448 filed in the Republic of Korea on September 17, 2010 and September 16, 2011, respectively, the entire contents of which are incorporated herein by reference.

### TECHNICAL FIELD

The present disclosure relates to an electrode for a magnesium secondary battery and a magnesium secondary battery including the same. More particularly, the present disclosure relates to an electrode for a magnesium secondary battery that has a thin-film structure and can be produced easily and at low cost, and a magnesium secondary battery including the electrode.

### BACKGROUND ART

In recent years, there has been increasing interest in energy storage technologies. As the application fields of energy storage technologies have been extended to mobile phones, camcorders, notebook computers and even electric cars, there is a growing demand for high energy-density batteries as power sources for such electronic devices.

As batteries capable of meeting this demand, lithium secondary batteries have been developed in the early 1990's and are currently used in a wide range of applications. A lithium secondary battery has a typical structure in which an anode composed of a carbon material capable of intercalating and deintercalating lithium ions, a cathode composed of a lithium-containing oxide, and a non-aqueous electrolyte solution of an appropriate amount of a lithium salt in a mixed organic solvent are accommodated in a battery case.

However, side reactions of electrolyte solutions and high reactivity of lithium cause safety problems of lithium secondary batteries. Lithium is a very expensive element because it is a rare resource. Particularly, with the recent increasing demand for medium and large size batteries, such safety and cost problems are becoming key factors which need to be taken into account and lithium secondary batteries are considered an impediment to medium and large size batteries.

In attempts to solve these problems, magnesium secondary batteries using magnesium as an electrode active material have recently been proposed as alternatives to lithium secondary batteries. In a typical magnesium secondary battery, magnesium ions from a magnesium plate as an electrode, specifically an anode, are intercalated into and deintercalated from a cathode active material to allow electrons to migrate, which enables charging and discharging of the battery. Magnesium has a theoretical capacity density similar to that of lithium and is environmentally friendly. Magnesium is cheaper and is better in terms of safety than lithium. Due to these advantages, magnesium secondary batteries have received considerable attention as potential replacements for lithium secondary batteries.

It is difficult to say that magnesium plates as anodes are inexpensive compared to all metals other than lithium. Further, a smaller thickness of anodes is required for higher energy-density batteries. That is, the production of thin magnesium plates is a prerequisite for the fabrication of batteries with high energy density. Since magnesium is less moldable than other metals, such as aluminum, highly advanced techniques are required to produce thin magnesium plates, leading to an increase in processing cost. This problem remains as an obstacle to the commercialization of magnesium secondary batteries.

### DISCLOSURE

### Technical Problem

The present disclosure is designed to solve the problems of the prior art, and therefore it is an object of the present disclosure to provide an electrode for a magnesium secondary battery that is inexpensive and has a thin-film structure suitable for increasing the energy density of the battery, and a magnesium secondary battery including the electrode.

### Technical Solution

According to an aspect of the present disclosure, there is provided an electrode for a magnesium secondary battery which includes a current collector and a magnesium plating layer formed on the surface of the current collector.

In the present disclosure, the electrode may be an anode.

In the present disclosure, the magnesium plating layer may have a thickness of 1 µm to 20 µm but is not limited to this thickness.

In the present disclosure, the magnesium plating layer may be formed by electrochemical plating.

In the present disclosure, the current collector may be made of copper, aluminum, steel use stainless (SUS), nickel or a carbonaceous material.

According to another aspect of the present disclosure, there is provided a method for producing an electrode for a magnesium secondary battery, the method including (S1) dipping a working electrode, a counter electrode and a reference electrode in a solution of a magnesium salt, (S2) applying a voltage to the electrodes, and (S3) forming a magnesium plating layer on the working electrode as a current collector.

In the present disclosure, the magnesium salt may be RMgX (wherein R is a C₁-C₁₀ linear or branched alkyl, aryl or amine group, preferably a methyl, ethyl, butyl, phenyl or aniline group, and X is a halogen, preferably chlorine or bromine), MgX₂ (wherein X is a halogen, preferably chlorine or bromine), R₂Mg (wherein R is an alkyl group, a dialkylboron group, a diarylboron group, an alkylcarbonyl group (for example, methylcarbonyl (-CO₂CH₃)) or an alkylsulfonyl group (for example, trifluoromethylsulfonyl (-SO₂CF₃)), MgC10₄, or a mixture of two or more kinds thereof.

The use of the electrode according to the present disclosure can be useful for the fabrication of a magnesium secondary battery with high energy density.

### Advantageous Effects

The electrode of the present disclosure is simpler to produce than magnesium foils and ribbons, which have been used as conventional electrodes for magnesium secondary batteries, and uses a copper or aluminum foil as a current collector, contributing to a reduction in the fabrication cost of a magnesium secondary battery.

In addition, the electrode of the present disclosure can be produced with a desired thickness because the thickness of the magnesium plating layer is freely controllable. Particularly, the thin-film structure of the electrode leads to the fabrication of a magnesium secondary battery with high energy density.

### DESCRIPTION OF DRAWINGS

The accompanying drawings illustrate preferred embodiments of the present disclosure and, together with the foregoing disclosure, serve to provide further understanding of the technical spirit of the present disclosure. However, the present disclosure is not to be construed as being limited to the drawings.
FIG. 1 is a photograph of an electrode for a magnesium secondary battery produced in accordance with an embodiment of the present disclosure.
FIG. 2 is an XRD pattern of an electrode for a magnesium secondary battery produced in accordance with an embodiment of the present disclosure.
FIG. 3 is a cyclic voltammogram of a 3-electrode cell using an electrode for a magnesium secondary battery produced in accordance with an embodiment of the present disclosure.
FIG. 4 is a graph of the results of charge/discharge tests on coin cells fabricated in Example 3 and Comparative Example 1.

### MODE FOR DISCLOSURE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The present disclosure provides an electrode for a magnesium secondary battery which includes a current collector and a magnesium plating layer formed on the surface of the current collector. The electrode may be an anode.

Any electrically conductive material may be used without limitation for the current collector. The current collector is preferably copper or aluminum in the form of a foil or ribbon, which is advantageous in terms of electrical conductivity, moldability and price.

The magnesium plating layer is formed by coating magnesium on the surface of the current collector. The current collector can be coated with magnesium by plating processes known in the art. The magnesium coating enables the attachment of magnesium to the surface of the current collector at a molecular level, making the coating layer uniform. In addition, a thin-film structure of the plating layer can be obtained at the level of a few micrometers, which has not previously been achieved in magnesium plates. There is no restriction on the thickness of the magnesium plating layer. The magnesium plating layer has a thickness of, for example, 1 µm to 20 µm, preferably 1 µm to 15 µm, more preferably 1 µm to 10 µm.

No particular limitation is imposed on the magnesium plating method so long as the plating layer can be formed in a uniform thin-film structure on the current collector. For example, both wet plating and dry plating processes may be applied to the formation of the plating layer. Non-limiting examples of the wet plating processes are electrochemical plating and electroless plating. Non-limiting examples of the dry plating processes are vacuum deposition and sputtering.

Now, a detailed description will be given concerning an embodiment of a method for producing an electrode for a magnesium secondary battery according to the present disclosure. This embodiment is provided for illustrative purposes only and is not intended to limit the scope of the present disclosure. The method will be described herein based on electrochemical plating, but it should be understood that various plating processes mentioned above can be applied to the method of the present disclosure.

First, a working electrode, a counter electrode and a reference electrode are dipped in a solution of a magnesium salt.

In the course of subsequent plating, magnesium ions dissociated from the magnesium salt are reduced to magnesium metal on a current collector. Examples of magnesium salts suitable for use in the method of the present disclosure include RMgX (wherein R is a C₁-C₁₀ linear or branched alkyl, aryl or amine group, preferably a methyl, ethyl, butyl, phenyl or aniline group, and X is a halogen, preferably chlorine or bromine), MgX₂ (wherein X is a halogen, preferably chlorine or bromine), R₂Mg (wherein R is an alkyl group, a dialkylboron group, a diarylboron group, an alkylcarbonyl group (for example, methylcarbonyl (-CO₂CH₃)) or an alkylsulfonyl group (for example, trifluoromethylsulfonyl (-SO₂CF₃)), and MgC10₄. These magnesium salts may be used alone or as a mixture of two or more kinds thereof. The magnesium salt may be used in combination with an alkyl aluminum as an additive.

The magnesium salt is dissolved in a suitable solvent. Any solvent capable of dissolving the magnesium salt may be used without limitation. As an example of the solvent, there can be exemplified an organic solvent, such as tetrahydrofuran (THF).

It is preferred that the current collector is the working electrode. As the current collector, there can be used copper, aluminum, steel use stainless (SUS), nickel or a carbonaceous material (for example, a carbon paper, fiber or seed) in the form of a foil or ribbon. The reference electrode may be one made of magnesium and the counter electrode may be a platinum electrode.

Next, a voltage is applied to the electrodes.

The voltage application allows an electrochemical reaction to proceed between the electrodes. During the electrochemical reaction, magnesium ions are originated from the magnesium salt dissolved in the solution and are reduced to magnesium metal on the current collector to form a plating layer.

The thickness of the magnesium plating layer coated on the surface of the current collector can be freely controlled by varying the concentration of the magnesium salt, the plating time, etc.

Finally, after the thickness of the magnesium plating layer reaches a desired level, the plating process is finished to obtain an electrode in which the magnesium plating layer is formed on the current collector.

The use of the electrode thus obtained can be useful for the fabrication of a magnesium secondary battery.

The electrode may be an anode.

The present disclosure also provides a magnesium secondary battery including the electrode as an anode. Specifically, the magnesium secondary battery includes the anode, a cathode, a separator interposed between the anode and the cathode, and an electrolyte solution.

The cathode of the magnesium secondary battery according to the present disclosure may be produced by a method commonly used in the art. For example, the cathode may be produced by mixing a cathode active material, a binder, a solvent, and optionally together with a conductive material and a dispersant, with stirring to prepare a slurry, applying the slurry to a current collector, followed by compression.

The cathode active material may be a transition metal compound or a magnesium composite metal oxide that can intercalate and deintercalate magnesium ions. As the transition metal compound, there may be used, for example, an oxide, sulfide or halide of scandium, ruthenium, titanium, vanadium, molybdenum, chromium, manganese, iron, cobalt, nickel, copper or zinc. More specific examples of such transition metal compounds include, but are not limited to, TiS₂, ZrS₂, RuO_{2,} Co₃O₄, Mo₆S₈ and V₂O₅. The magnesium composite metal oxide may be, for example, a magnesium compound represented by Mg(M₁₋ₓAₓ)O₄ (wherein 0 ≤ x ≤ 0.5, M is Ni, Co, Mn, Cr, V, Fe, Cu or Ti, and A is Al, B, Si, Cr, V, C, Na, K or Mg).

As binders suitable for the production of the cathode, there may be used various kinds of binder polymers, for example, vinylidene fluoride-co-hexafluoropropylene (PVDF-co-HFP), polyvinylidene fluoride, polyacrylonitrile and polymethyl methacrylate.

As conductive materials for the production of the cathode, there may be used various common conductive carbon materials, for example, graphite, carbon black, acetylene black, Ketjen black, Denka black, Super-P graphite and carbon nanotubes.

The magnesium secondary battery of the present disclosure can be fabricated by interposing the separator between the cathode and the anode to form an electrode assembly, and impregnating the electrode assembly with an electrolyte solution.

For stable operation of the battery, the electrolyte solution used is required to be electrochemically stable at a potential of 1 V or higher versus magnesium.

A magnesium salt may be used as an electrolyte of the electrolyte solution. For example, the electrolyte may be a synthetic product derived from a Grignard reagent as a strong reducing agent. More specific examples of electrolytes suitable for use in the electrolyte solution include, but are not limited to, RMgX (wherein R is a C₁-C₁₀ linear or branched alkyl, aryl or amine group, preferably a methyl, ethyl, butyl, phenyl or aniline group, and X is a halogen, preferably chlorine or bromine), MgX₂ (wherein X is a halogen, preferably chlorine or bromine), R₂Mg (wherein R is an alkyl group, a dialkylboron group, a diarylboron group, an alkylcarbonyl group (for example, methylcarbonyl (-CO₂CH₃)) or an alkylsulfonyl group (for example, trifluoromethylsulfonyl (-SO₂CF₃)), and MgClO₄. These electrolytes may be used alone or as a mixture of two or more kinds thereof.

A solvent having a high oxidation potential and capable of dissolving the electrolyte is preferably used in the electrolyte solution. A representative example of the solvent is an organic solvent selected from the group consisting of, but not limited to, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, γ-butyrolactone, propylene sulfite, tetrahydrofuran (THF), and mixtures thereof.

The separator may be an inorganic or organic separation film that is commonly used in the art. As the inorganic separation film, there can be used, for example, a glass filter. The organic separation film may be a porous polymer film. Examples of materials for the porous polymer film include polyolefin polymers, such as ethylene homopolymers, propylene homopolymers, ethylene/butene copolymers, ethylene/hexene copolymers and ethylene/methacrylate copolymers. The separator may be a laminate of two or more porous polymer films.

The magnesium secondary battery of the present disclosure employs a battery case commonly used in the art. There is no restriction on the shape of the battery case according to the application of the magnesium secondary battery. The battery case may be cylindrical, prismatic, pouch-type or coin-type depending on the shape of a can it employs.

Hereinafter, preferred embodiments of the present disclosure will be described in detail. The embodiments of the present disclosure, however, may take several other forms, and the scope of the present disclosure should not be construed as being limited to the following examples. The embodiments of the present disclosure are provided to more fully explain the present disclosure to those having ordinary knowledge in the art to which the present disclosure pertains.

### EXAMPLES

### Example 1: Production of electrode

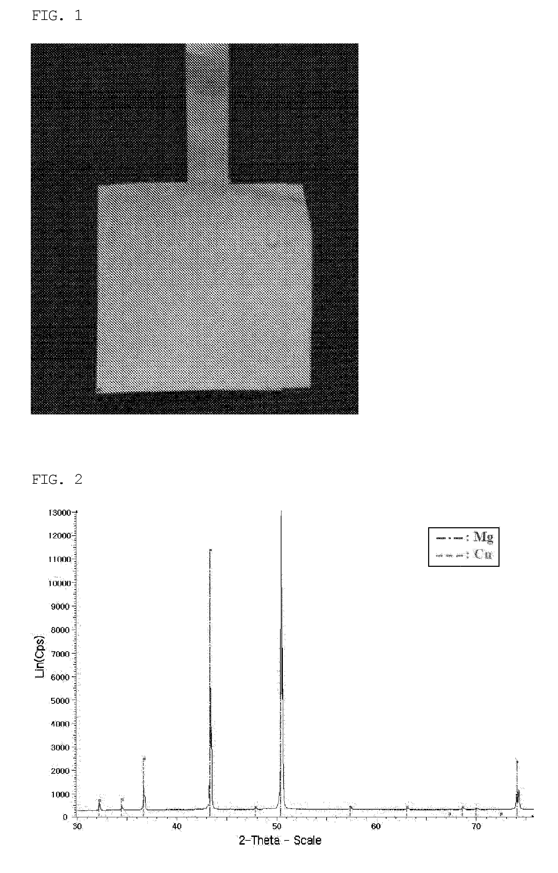

A 20 µm thick copper foil (2 cm x 2 cm) as a working electrode, a platinum (Pt) wire as a counter electrode and a magnesium foil as a reference electrode were dipped in a 2 M solution of butyl magnesium chloride (BuMgCl) in tetrahydrofuran (THF). Thereafter, plating was performed at 5 mA for 1 hr to form a magnesium plating layer on the copper foil, completing the production of an electrode. A photograph of the electrode is shown in FIG. 1.

It can be confirmed from FIG. 1 that the plating layer was uniformly formed on the copper current collector.

### Experimental Example 1: XRD measurement

X-ray diffraction (XRD) analysis was done on the electrode produced in Example 1, and the results are shown in FIG. 2.

Referring to FIG. 2, peaks corresponding to magnesium and copper are observed. This observation demonstrates that the magnesium coating layer was formed on the copper current collector.

The amount of the magnesium plated was about 0.0022 g and the thickness of the plating layer was about 3 µm.

### Example 2: Fabrication of 3-electrode cell

A 3-electrode magnesium cell was fabricated using the electrode produced in Example 1 as an anode (counter electrode), Mo₆S₈ as a cathode (working electrode), a magnesium foil as a reference electrode and a 0.25 M electrolyte solution of Mg(AlCl₂BuEt)₂ in tetrahydrofuran.

### Experimental Example 2: Cyclic voltammetry

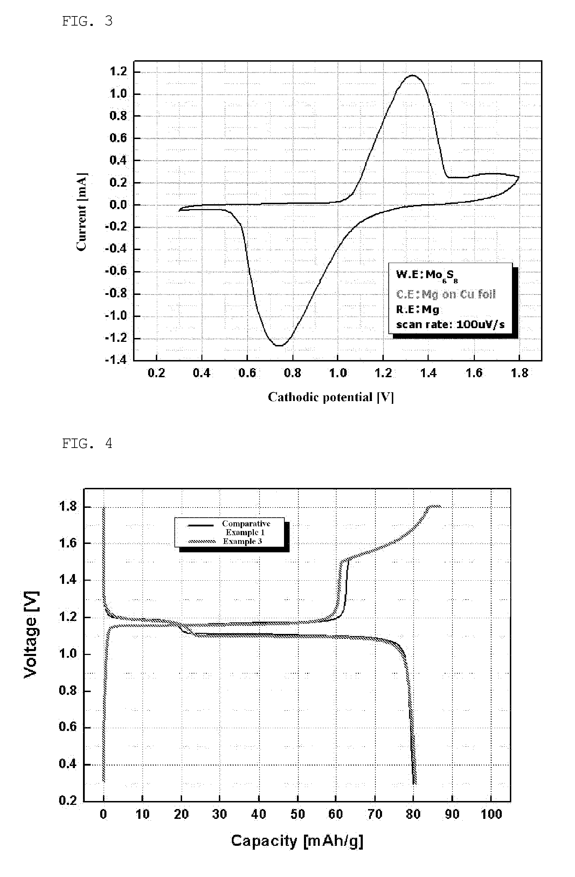

The cyclic voltammogram of the cell fabricated in Example 2 was measured at a scan rate of 100 µV/s at room temperature and is shown in FIG. 3.

As can be seen from FIG. 3, peaks corresponding to the intercalation-deintercalation of magnesium ions are observed, indicating that the electrode produced in Example 1 is useful as an electrode (for example, an anode) for a magnesium secondary battery.

### Example 3: Fabrication of 2-electrode coin cell

A 20 µm thick copper foil (2 cm x 2 cm) as a working electrode, a platinum (Pt) wire as a counter electrode and a magnesium foil as a reference electrode were dipped in a 2 M solution of butyl magnesium chloride (BuMgCl) in tetrahydrofuran (THF). Thereafter, plating was performed at 1 mA for 10 hr to form a magnesium plating layer on the copper foil, completing the production of an electrode as an anode.

Mo₆S₈ as a cathode active material, Denka black as a conductive material and KF1100 as a binder in a ratio of 80:10:10 were added to and mixed with NMP to prepare a cathode slurry. The slurry was applied to a 10 µm thick SUS foil and dried to produce a cathode.

A glass filter as a separation film was interposed between the cathode and the anode to form an electrode assembly, and the electrode assembly was impregnated with a 0.25 M electrolyte solution of Mg(AlCl₂BuEt)₂ in tetrahydrofuran as an electrolyte solution to fabricate a coin cell.

### Comparative Example 1

A coin cell was fabricated in the same manner as in Example 3, except that a 50 µm thick magnesium thin-film foil was used as an anode.

### Experimental Example 3: Charge/discharge tests

Each of the coin cells fabricated in Example 3 and Comparative Example 1 was subjected to a charge/discharge test at a constant rate of 0.1 C over a voltage range of 0.3 V to 1.8 V to determine the voltage profile and capacity thereof. The results are shown in FIG. 4.

Referring to FIG. 4, the charge/discharge curves of the cell of Example 3 at 0.1 C reveal the intercalation of magnesium. The cell of Example 3 was found to have a capacity of about 80 mAh/g, which is comparable to that of the cell of Comparative Example 1 using the magnesium thin-film foil as a conventional anode.

## Claims

1. An electrode for a magnesium secondary battery, comprising a current collector and a magnesium plating layer formed on the surface of the current collector.

2. The electrode according to claim 1, wherein the electrode is an anode.

3. The electrode according to claim 1, wherein the magnesium plating layer has a thickness of 1 µm to 20 µm.

4. The electrode according to claim 1, wherein the magnesium plating layer is formed by electrochemical plating.

5. The electrode according to claim 1, wherein the current collector is made of copper, aluminum, steel use stainless (SUS), nickel or a carbonaceous material.

6. A method for producing an electrode for a magnesium secondary battery, the method comprising
(S1) dipping a working electrode, a counter electrode and a reference electrode in a solution of a magnesium salt,
(S2) applying a voltage to the electrodes, and
(S3) forming a magnesium plating layer on the working electrode.

7. The method according to claim 6, wherein the working electrode is a current collector of the electrode.

8. The method according to claim 6, wherein the magnesium salt is selected from the group consisting of RMgX (wherein R is a C₁-C₁₀ linear or branched alkyl, aryl or amine group and X is a halogen), MgX₂ (wherein X is a halogen), R₂Mg (wherein R is an alkyl, dialkylboron, diarylboron, alkylcarbonyl or alkylsulfonyl group, MgClO₄, and mixtures thereof.

9. A magnesium secondary battery comprising a cathode, an anode, a separator interposed between the cathode and the anode, and an electrolyte solution wherein the anode is the electrode according to any one of claims 1 to 5.

10. The magnesium secondary battery according to claim 9, wherein the cathode comprises a cathode active material selected from the group consisting of: an oxide, sulfide or halide of a metal selected from the group consisting of scandium, ruthenium, titanium, vanadium, molybdenum, chromium, manganese, iron, cobalt, nickel, copper and zinc; magnesium composite metal oxides; and mixtures thereof.

11. The magnesium secondary battery according to claim 9, wherein the electrolyte solution is electrochemically stable at a potential of 1 V or higher versus magnesium.

12. The magnesium secondary battery according to claim 9, wherein the electrolyte solution comprises an electrolyte comprising a synthetic product derived from a Grignard reagent.

13. The magnesium secondary battery according to claim 9, wherein the electrolyte solution comprises at least one organic solvent selected from the group consisting of propylene carbonate, ethylene carbonate, diethyl carbonate, dimethyl carbonate, ethyl methyl carbonate, methyl propyl carbonate, dipropyl carbonate, dimethyl sulfoxide, acetonitrile, dimethoxyethane, diethoxyethane, vinylene carbonate, sulfolane, γ-butyrolactone, propylene sulfite and tetrahydrofuran.
